# EUROPÄISCHE PATENTSCHRIFT

(11) **EP 3 141 735 B1**
(45) Veröffentlichungstag und Bekanntmachung des Hinweises auf die Patenterteilung: **17.06.2020**
(21) Anmeldenummer: 16190545.0
(22) Anmeldetag: 29.01.2014
(51) Int. Cl.: F02M 35/10, F02D 23/00, F02B 37/12

(54) **BRENNKRAFTMASCHINE MIT BOOSTER**
COMBUSION ENGINE WITH BOOSTER
MOTEUR À COMBUSTION INTERNE COMPRENANT UN SURVOLTEUR

(30) Priorität: 13.02.2013 DE 102013002530
(43) Veröffentlichungstag der Anmeldung: 15.03.2017
(62) Teilanmeldung aus: 14701999.6
(73) Patentinhaber: Volkswagen Aktiengesellschaft, 38440 Wolfsburg (DE)
(72) Erfinder: Cornelius, Volker, 38162 Cremlingen (DE); Groenendijk, Axel, 38518 Gifhorn (DE)

(56) Entgegenhaltungen:
- DE-A1-102010 023 188
- DE-A1-102012 009 288
- DE-C- 943 203
- GB-A- 2 186 023

## Beschreibung

Die Erfindung betrifft eine Brennkraftmaschine mit einem Frischgasstrang zum Zuführen von Verbrennungsluft an Arbeitszylinder der Brennkraftmaschine, wobei in einer Ladeluftstrecke des Frischgasstrangs ein mechanisch, insbesondere elektrisch angetriebener Verdichter angeordnet ist, gemäß dem Oberbegriff des Patentanspruchs 1.

Aus der DE 102 02 146 B4 ist eine Brennkraftmaschine mit einem Abgasturbolader bekannt, wobei in einem Frischgasstrang stromauf eines Verdichters der Ladeeinrichtung, konkret eines Abgasturboladers, ein elektrisch angetriebener Verdichter angeordnet ist. Um bei einem kleinen Verdichter einen ausreichenden Luftmassenstrom zu erzielen, ist ein Bypasskanal für den Verdichter mit einer zusätzlichen, ansteuerbaren Klappe vorgesehen. Die Klappe verursacht jedoch einen Druckverlust in dem Frischgasstrang.

Die DE 943 203 C zeigt eine Verbrennungskraftmaschine mit hintereinander geschalteten Ladern, wobei der zweite Lader ein mechanisch angetriebener Kompressor ist. Der mechanische angetriebene Kompressor ist in eine Umleitung integriert. Ein Drehschieber kann bei normaler Aufladung die Umleitung versperren, so dass der mechanisch angetriebene Kompressor umgangen wird. In einer weiteren Stellung kann der Drehschieber den Weg zur Umleitung freigeben, so dass die Aufladung mit dem mechanisch angetriebenen Kompressor unterstützt wird.

Die GB 2 186 023 A offenbart eine Brennkraftmaschine mit Doppelaufladung, wobei im Frischlufttrakt ein Rückschlagventil vor dem Verdichter eines Abgasturboladers, ein Absperrventil zur Regelung des Durchflusses eines Bypasses, in welchem ein mechanisch angetriebener Verdichter angeordnet ist, und eine Drosselklappe zur Regelung des gesamten Frischluftflusses.

Die DE 10 2010 023 188 A1 beschreibt einen Verbrennungsmotor mit einem Turboverdichter, dessen Druckseite mit der Saugseite eines Verdichters eines Abgasturboladers verbunden ist und dessen Saugseite mit dem Ansaugtrakt des Verbrennungsmotors verbunden ist. In der saugseitigen Verbindungsleitung des Turboverdichters ist ein Absperrorgan angeordnet.

Aus "Kraftfahrtechnisches Taschenbuch", 27. Auflage, Vieweg+Teubner Verlag, 2011, Seite 479 ist es bekannt, zum quasistationären Betrieb der Abgasturboaufladung das Ansprechverhalten eines für hohe Nennleistungen ausgelegten Abgasturboladers durch Reihenschaltung mit einem elektrisch angetriebenen Strömungsverdichter ("Booster") zu verbessern. Durch die Reihenschaltung zweier Strömungsverdichter wird der nutzbare Kennfeldbereich erweitert. Der Booster kann in Strömungsrichtung vor oder hinter dem Abgasturbolader positioniert werden. Ein Bypass gestattet die Umgehung des Boosters, wenn dieser nicht fördert. Eine mögliche Betriebsweise dieses Systems ist ein Betrieb der elektrisch getriebenen Stufe ausschließlich in transienten Betriebsphasen im unteren Drehzahlbereich des Motors.

In der EP 1 974 136 B1 ist ein aufgeladener Dieselmotor offenbart, bei dem hinter einem Verdichter eines Turboladers eine Abzweigung ausgebildet ist, an der sich die Ansaugleitung in einen ersten Kanal mit einem Drosselventil und einem diesen umgehenden Bypasskanal mit einem weiteren Drosselventil sowie einem stromabwärts des Drosselventils angeordneten Verdichter teilt. Die beiden Kanäle münden vor einem folgenden Ladeluftkühler wieder in die gemeinsame Ansaugleitung. Zusätzlich mündet zwischen dem Verdichter und der Drosselklappe ein Hochdruckabgasrückführkanal in den Bypasskanal. Eine Abgasrückführung findet somit nur bei eingeschaltetem Verdichter statt. Wird dieser jedoch lediglich genutzt, um bei plötzlichen Laststeigerungen eine zusätzliche Luftfüllung der Zylinder sicher zu stellen, ist diese Anordnung nicht zweckmäßig, da in diesen Lastfällen lediglich geringe Mengen Abgas zurückgeführt werden.

Des Weiteren ist aus der DE 10 2010 060 060 A1 ein Dreiwege-Drosselventil bekannt, welches in einer Lufteinlassleitung im Bereich eines von der Lufteinlassleitung abzweigenden Bypasskanals angeordnet ist. Der Bypasskanal weist eine Öffnung auf, in die Abgas aus einer Abgasrückführung einströmen kann. Dieses Abgas wird durch die Luft im Bypasskanal mitgerissen und gelangt über eine Mündung des Bypasskanals wieder in die Ansaugleitung. In einer ersten Stellung verschließt dieses Drosselventil die Ansaugleitung weitgehend und zwar derart, dass die gesamte Luft in den Bypasskanal strömt. Dies dient zur Erhöhung der Abgasrückführrate bei niedrigen Drehzahlen des Motors. In einer umgekehrten Drosselstellung soll gleichzeitig der Luftstrom in den Bypasskanal und die Ansaugleitung geregelt werden. Eine Regelung für Ansaugsysteme für aufgeladene Verbrennungsmotoren mit einem zusätzlichen elektrischen Verdichter wird nicht offenbart.

Der Erfindung liegt die Aufgabe zugrunde, die Einbindung eines mechanisch, insbesondere elektrisch angetriebenen Verdichters in eine Ladeluftstrecke des Frischgasstranges der Brennkraftmaschine zu verbessern.

Diese Aufgabe wird erfindungsgemäß durch eine Brennkraftmaschine der o.g. Art mit den in Anspruch 1 gekennzeichneten Merkmalen gelöst. Ein Verfahren zum Betreiben einer erfindungsgemäßen Brennkraftmaschine ist Gegenstand des Anspruchs 14. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass in der Ladeluftstrecke eine Luftregel-/Abstellklappe derart angeordnet ist, dass in Abhängigkeit von einer Stellung der Luftregel-/Abstellklappe ein Gasmassenstrom in der Ladeluftstrecke vollständig oder teilweise über den mechanisch angetriebenen Verdichter oder an dem mechanisch angetriebenen Verdichter vorbei strömen kann. Dabei kann der mechanisch angetriebene Verdichter parallel zur Luftregel-/Abstellklappe angeordnet sein.

Dies hat den Vorteil, dass für die Bypass-Funktion für den mechanisch angetriebenen Verdichter kein zusätzliches Bauteil für die Umgehung des mechanisch angetriebenen Verdichters notwendig ist, sondern statt einer selbstregelnden, druckabhängigen Funktion eines Rückschlagventils in einem zusätzlichen Bypasskanal eine gesteuerte Funktion der vorhandenen Luftregel-/Abstellklappe ohne zusätzlichen Bypasskanal nutzbar ist. Gleichzeitig kann die Möglichkeit gegeben sein, beide Frischluftpfade, über die Luftregel-/Abstellklappe einerseits und den mechanisch angetriebenen Verdichter andererseits, verschlossen zu halten.

Weiterhin ist erfindungsgemäß vorgesehen, dass der mechanisch angetriebene Verdichter in einen einen Ladeluftstreckenabschnitt teilweise umgehenden Bypasskanal integriert ist und die Luftregel-/Abstellklappe
- in eine erste, den Ladeluftstreckenabschnitt stromauf eines Auslasses des Bypasskanals und stromab eines Einlasses des Bypasskanals verschließende Stellung bewegbar ist, und
- in eine zweite, den Ladeluftstreckenabschnitt stromab des Auslasses des Bypasskanals oder stromauf des Einlasses des Bypasskanals verschließende Stellung bewegbar ist.

Ein Verfahren zum Betreiben einer solchen Brennkraftmaschine kann vorsehen, dass bei eingeschaltetem mechanisch angetriebenem Verdichter (im Betrieb eines Verbrennungsmotors der Brennkraftmaschine) zur zusätzlichen Kompression des Gasmassenstroms die Luftregel-/Abstellklappe in die erste Stellung bewegt wird, wodurch der gesamte Gasmassenstrom über den mechanisch angetriebenen Verdichter geführt wird, und beim Abschalten des Verbrennungsmotors der Brennkraftmaschine die Luftregel-/Abstellklappe in die zweite Stellung bewegt wird, wodurch eine Zufuhr des Gasmassenstroms zu dem Verbrennungsmotor vollständig unterbrochen und ein ungewolltes Nachlaufen des Verbrennungsmotors verhindert wird .

Eine hinsichtlich der Aktivierung bzw. Inaktivierung des mechanisch angetriebenen Verdichters besonders flexible Anbindung des mechanisch angetriebenen Verdichters an die Brennkraftmaschine erzielt man dadurch, dass der mechanisch angetriebene Verdichter ein elektrisch angetriebener Verdichter ist.

Bevorzugt ist die Ladeeinrichtung ein Abgasturbolader, insbesondere ein Wastegate-Abgasturbolader oder ein Abgasturbolader mit variabler Turbinengeometrie.

Eine besonders wirksame und gleichzeitig einfach zu realisierende Regelfunktion der Luftregel-/Abstellklappe zusätzlich als Bypass-Klappe für den mechanisch angetriebenen Verdichter erzielt man dadurch, dass die Luftregel-/Abstellklappe derart angeordnet und ausgebildet ist, dass diese einen Abschnitt der Ladeluftstrecke parallel zum mechanisch angetriebenen Verdichter zwischen einem Einlass und einem Auslass eines den mechanisch angetriebenen Verdichter integrierenden Bypasses wahlweise öffnet oder verschließt.

Eine motornahe Anordnung der Luftregel-/Abstellklappe erzielt man dadurch, dass die Luftregel-/Abstellklappe derart angeordnet und ausgebildet ist, dass diese einen Auslass eines den mechanisch angetriebenen Verdichter integrierenden Bypasses (und somit die Mündung des Bypasses in einen Hauptkanal der Ladeluftstrecke) wahlweise öffnet oder verschließt.

Eine besonders funktionssichere Zusatzfunktion der Luftregel-/Abstellklappe als Bypass-Klappe für den mechanisch angetriebenen Verdichter erzielt man dadurch, dass die Luftregel-/Abstellklappe derart angeordnet und ausgebildet ist, dass diese einen Einlass eines den mechanisch angetriebenen Verdichter integrierenden Bypasses (und somit die Abströmstelle des Bypasses aus einem Hauptkanal der Ladeluftstrecke) wahlweise öffnet oder verschließt.

Besonders bevorzugt ist die Luftregel-/Abstellklappe zudem noch in mindestens eine, vorzugsweise eine Vielzahl von dritte, den Ladeluftstreckenabschnitt zumindest teilweise freigebende Stellungen bewegbar. Durch ein Bewegen der Luftregel-/Abstellklappe in eine (definierte) dritte Stellung kann eine Regelung des dem Verbrennungsmotor zugeführten Gasmassenstroms erfolgen.

Somit kann mittels einer einzelnen Luftregel-/Abstellklappe sowohl ein Einbinden oder Ausschließen des mechanisch angetriebenen Verdichters in die beziehungsweise aus der Ladeluftstrecke als auch ein Regeln des dem Verbrennungsmotor zugeführten Gasmassenstroms als auch ein vollständiges Verschließen der Ladeluftstrecke zum Verhindern eines Nachlaufens eines Verbrennungsmotors der Brennkraftmaschine realisiert werden.

Zudem kann mittels der Luftregel-/Abstellklappe auch noch der Massenstrom eines über eine (Hochdruck-)Abgasrückführung geführten Abgases beeinflusst werden, wozu vorzugsweise stromabwärts der Luftregel-/Abstellklappe ein entsprechender (Hochdruck-)Abgasrückführkanal in die Ladeluftstrecke mündet. Die Beeinflussung erfolgt dabei über den unterschiedlichen, von der jeweiligen Stellung abhängigen Druckabfall über der Luftregel-/Abstellklappe.

Die Luftregel-/Abstellklappe ist vorzugsweise so positioniert, dass eine Klappenwelle der Luftregel-/Abstellklappe in Verlängerung einer radial äußeren Wand eines einen Auslass eines Strömungsgehäuses des Verdichters bildenden Bypasskanalabschnitts angeordnet ist. So können auf einfache Weise die beiden verschließenden Stellungen verwirklicht werden. Zusätzlich wird es ermöglicht, durch die Luftregel-/Abstellklappe ein Rückströmen aus dem Bypasskanal in einen Zwischenraum zwischen dem Bypasskanal und einem Klappenkörper der Luftregel-/Abstellklappe zu verhindern.

Die Klappenwelle der Luftregel-/Abstellklappe ist vorzugsweise zentral, d.h. durch den Flächenschwerpunkt des entsprechenden Kanalquerschnitts verlaufend, in der Ladeluftstrecke angeordnet. Bei einem kreisförmigen Kanalquerschnitt ergibt sich somit eine radiale Anordnung. Dadurch kann eine genaue Regelbarkeit des Gasmassenstroms ermöglicht werden.

In einer bevorzugten Ausgestaltung der erfindungsgemäßen Brennkraftmaschine kann vorgesehen sein, dass die Luftregel-/Abstellklappe in ihrer ersten Stellung in Verlängerung eines radial äußeren, die Strömung im Bypasskanal begrenzenden Wandabschnitts eines einen Auslass eines Strömungsgehäuses des Verdichters bildenden, gekrümmt verlaufenden Bypasskanalabschnitts angeordnet ist. Dadurch kann eine Wirbelbildung vermieden und somit der Strömungswiderstand verringert werden.

Ebenfalls zur Vermeidung von Wirbelbildung kann vorgesehen sein, dass im Bereich der Mündung eine Mittellängsachse des Bypasskanalabschnitts schräg zu einer Mittellängsachse des Ladeluftstreckenabschnitts angeordnet ist. Weiterhin kann dadurch bei (teilweise) geöffneter Drosselklappe (dritte Stellung) ein Einströmen von Frischgas zu dem Verdichter entgegen der vorgesehenen Strömungsrichtung vermieden oder zumindest verringert werden. Dabei ist vorzugsweise vorgesehen, dass der Bypasskanalabschnitt in Strömungsrichtung schräg zur Mittellängsachse des Ladeluftstreckenabschnitts ausgerichtet ist, wenn die Luftregel-/Abstellklappe im Auslass des Bypasskanals oder in der Nähe davon angeordnet ist. Ist die Luftregel-/Abstellklappe dagegen im Einlass des Bypasskanals oder in der Nähe davon angeordnet, so kann vorzugsweise vorgesehen sein, dass der Bypasskanalabschnitt entgegen der Strömungsrichtung schräg zur Mittellängsachse des Ladeluftstreckenabschnitts ausgerichtet ist.

In einer weiterhin bevorzugten Ausgestaltung der erfindungsgemäßen Brennkraftmaschine kann zudem vorgesehen sein, dass die Luftregel-/Abstellklappe in der ersten Stellung und der zweiten Stellung schräg bezüglich einer Mittellängsachse des Ladeluftstreckenabschnitts angeordnet ist. Dadurch kann vorteilhaft ein gut abdichtendes Anliegen der Luftregel-/Abstellklappe an einer Wandung des Ladeluftstreckenabschnitts bewirkt werden.

Weiterhin bevorzugt kann ein Winkel zwischen der Luftregel-/Abstellklappe in der ersten Stellung und der Mittellängsachse des Ladeluftstreckenabschnitts bis zu 10° kleiner sein als ein Winkel zwischen der Mittellängsachse des Ladeluftstreckenabschnitts und der Mittellängsachse des Bypasskanalabschnitts. Dadurch kann erreicht werden, dass der Gasmassenstrom beim Ausströmen aus dem Bypasskanal lediglich geringfügig in Richtung des Ladeluftstreckenabschnitts umgelenkt wird. Hierdurch kann der Strömungswiderstand reduziert werden.

Vorteilhafterweise kann vorgesehen sein, dass ein Gehäuse des in den Ladeluftstreckenabschnitt mündenden Bypasskanalabschnitts einstückig mit einem Gehäuse des Ladeluftstreckenabschnitts sowie einem Strömungsgehäuse des Verdichters ausgebildet ist. Dadurch kann insbesondere ein Montageaufwand für eine (zumindest) den Ladeluftstreckenabschnitt, den mechanisch angetriebenen Verdichter und die Luftregel-/Abstellklappe integrierende Konstruktionseinheit der Ladeluftstrecke reduziert werden.

Vorteilhaft ist es, wenn die Luftregel-/Abstellklappe über einen elektromotorischen Aktor betätigbar ist, woraus eine genaue Einstellbarkeit der Luftregel-/Abstellklappe resultieren kann.

Die erfindungsgemäße Brennkraftmaschine kann eine fremdzündende oder eine selbstzündende Brennkraftmaschine sein. Die Brennkraftmaschine kann eine ViertaktBrennkraftmaschine und/oder eine Kolben-Brennkraftmaschine sein. Insbesondere kann die Brennkraftmaschine drei, vier, fünf oder sechs Zylinder aufweisen.

Bevorzugt gelangt die erfindungsgemäße Brennkraftmaschine in einem Kraftfahrzeug, insbesondere einem (schienenlosen) Landfahrzeug, zum Einsatz.

Die Erfindung wird im Folgenden anhand der Zeichnungen näher erläutert. Diese zeigen in
- Fig. 1: ein schematisches Blockschaltbild einer ersten bevorzugten Ausführungsform einer erfindungsgemäßen Brennkraftmaschine;
- Fig. 2: ein schematisches Blockschaltbild einer zweiten bevorzugten Ausführungsform einer erfindungsgemäßen Brennkraftmaschine;
- Fig. 3: ein schematisches Blockschaltbild einer beispielhaften Anordnung von einer Luftregel-/Abstellklappe und einem mechanisch angetriebenem Verdichter in einer Ladeluftstrecke für die erste bevorzugte Ausführungsform gemäß Fig. 1, wobei sich die Luftregel-/Abstellklappe als Regelklappe für den mechanisch angetriebenem Verdichter in einer Betriebsstellung "zweistufiger Betrieb mit Abgasturbolader und mechanisch angetriebenem Verdichter" befindet;
- Fig. 4: das schematische Blockschaltbild der Anordnung gemäß Fig. 3, wobei sich die Luftregel-/Abstellklappe als Regelklappe für den mechanisch angetriebenem Verdichter in einer Betriebsstellung "nur Abgasturbolader-Betrieb" befindet;
- Fig. 5: das schematische Blockschaltbild der Anordnung gemäß Fig. 3, wobei sich die Luftregel-/Abstellklappe in ihrer eigentlichen Funktion in einer Betriebsstellung "Drosseln bis vollständig Abschalten" befindet;
- Fig. 6: ein schematisches Blockschaltbild einer beispielhaften Anordnung von einer Luftregel-/Abstellklappe und einem mechanisch angetriebenem Verdichter in einer Ladeluftstrecke für die zweite bevorzugte Ausführungsform gemäß Fig. 2, wobei sich die Luftregel-/Abstellklappe als Regelklappe für den mechanisch angetriebenem Verdichter in einer Betriebsstellung "zweistufiger Betrieb mit Abgasturbolader und mechanisch angetriebenem Verdichter" befindet;
- Fig. 7: das schematische Blockschaltbild der Anordnung gemäß Fig. 6, wobei sich die Luftregel-/Abstellklappe als Regelklappe für den mechanisch angetriebenem Verdichter in einer Betriebsstellung "nur Abgasturbolader-Betrieb" befindet;
- Fig. 8: das schematische Blockschaltbild der Anordnung gemäß Fig. 6, wobei sich die Luftregel-/Abstellklappe in ihrer eigentlichen Funktion in einer Betriebsstellung "Drosseln bis vollständig Abschalten" befindet;
- Fig. 9: ein schematisches Blockschaltbild einer dritten Ausführungsform einer erfindungsgemäßen Brennkraftmaschine;
- Fig. 10: eine einen Ladeluftstreckenabschnitt, einen elektrisch angetriebenen Verdichter und eine Ladeluft/Abstellklappe integrierende Baugruppe in einer perspektivischen Ansicht; und
- Fig. 11a - 11c: einen Schnitt durch einen Teil der Baugruppe gemäß der Fig. 10 mit drei verschiedenen Klappenstellungen der Ladeluft/Abstellklappe.

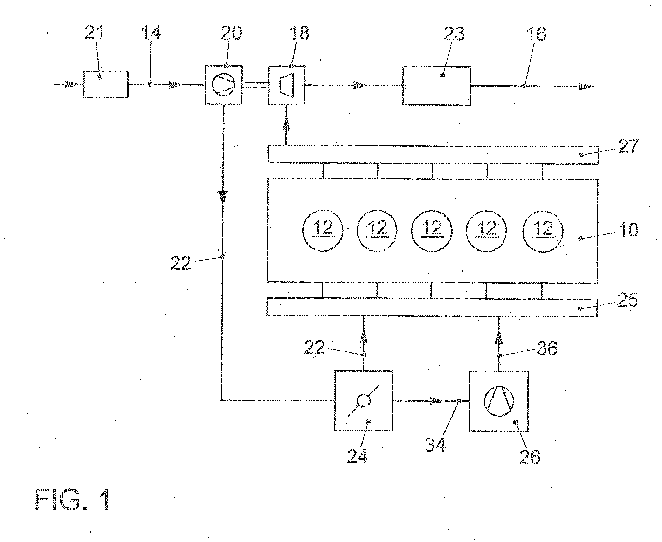

Die in Fig. 1 dargestellte, erste bevorzugte Ausführungsform einer erfindungsgemäßen Brennkraftmaschine weist einen Motorblock 10 eines Verbrennungsmotors mit Arbeitszylindern 12, hier beispielhaft fünf Arbeitszylindern 12, auf, wobei jeder Arbeitszylinder 12 fluidleitend mit einem Frischgasstrang 14 und einem Abgasstrang 16 verbunden ist. Die Brennkraftmaschine weist als Ladeeinrichtung einen Abgasturbolader mit einer in dem Abgasstrang 16 angeordneten Turbine 18 und einem in dem Frischgasstrang angeordneten Verdichter 20 auf. Ein Abschnitt des Frischgasstranges 14 stromab des Verdichters 20 wird als Ladeluftstrecke 22 bezeichnet. In der Ladeluftstrecke 22 ist eine Luftregel-/Abstellklappe 24 angeordnet. Diese beinhaltet eine ansteuerbare Klappe, welche je nach Stellung einen Strömungsquerschnitt der Ladeluftstrecke 22 verändert bzw. vollständig verschließt und dient zur Luftregelung sowie zum Abstellen der Brennkraftmaschine. In dem Frischgasstrang 14 ist stromauf des Verdichters 20 ein Luftfilter 21 angeordnet. In dem Abgasstrang 16 ist stromab der Turbine 18 eine Abgasnachbehandlungseinrichtung 23, die beispielsweise einen Katalysator und/oder einen Partikelfilter beinhaltet, angeordnet. Mit Bezugszeichen 25 ist schematisch ein Sammelrohr des Frischgasstranges 14 und mit 27 ist schematisch ein Abgaskrümmer des Abgasstranges 16 dargestellt. Das Sammelrohr 25 kann auch als Saugrohr bezeichnet werden. Es kann ein Ladeluftkühler in dem Sammelrohr 25 integriert oder aufgenommen sein.

Erfindungsgemäß ist in der Ladeluftstecke 22 zusätzlich ein mechanisch angetriebener Verdichter 26, nachfolgend "Booster" genannt, parallel zur Luftregel-/Abstellklappe 24 angeordnet. Hierbei ist ein Einlass 34 des Boosters 26 mit der Ladeluftstrecke 22 stromauf der Luftregel-/Abstellklappe 24 bzw. mit der Luftregel-/Abstellklappe 24 und ein Auslass 36 des Boosters 26 mit der Ladeluftstrecke 22 stromab der Luftregel-/Abstellklappe 24 bzw. mit dem Sammelrohr 25 fluidleitend verbunden. Dieser Booster 26 dient zum zusätzlichen Verdichten des den Arbeitszylindern 12 zugeführten Frischgases und wird beispielsweise von einem Elektromotor angetrieben. Bei hohem Massenstrom des Frischgases in dem Frischgasstrang 14 bzw. der Ladeluftstrecke 22 würde der Booster 26 jedoch einen hohen Strömungswiderstand bewirken, wobei gleichzeitig der Abgasturbolader einen ausreichenden Ladedruck zur Verfügung stellen kann. In derartigen Betriebsphasen der Brennkraftmaschine wird daher der Booster 26 abgeschaltet und das Frischgas an diesem vorbei geleitet.

Durch die erfindungsgemäße Anordnung des Boosters 26 parallel zur Luftregel-/Abstellklappe 24 ist kein zusätzlicher Bypasskanal mit entsprechendem Bypassventil für den Booster 26 notwendig, sondern es kann statt dessen für eine Bypass-Funktion, bei der der Massenstrom des Frischgases an dem Booster 26 vorbei geleitet wird und der Booster 26 abgeschaltet ist, die Luftregel-/Abstellklappe 24 verwendet werden.

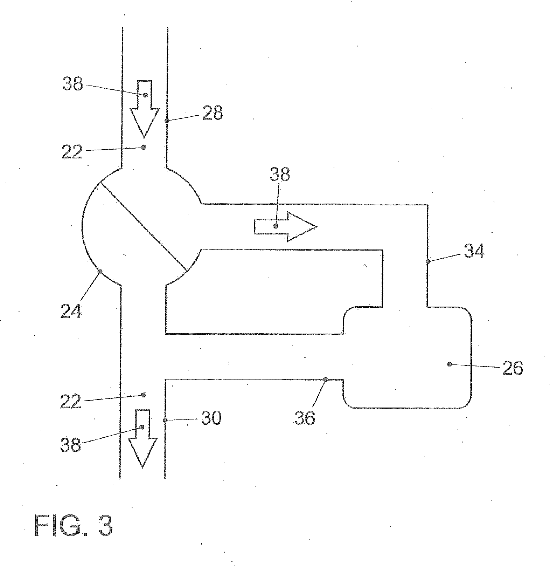

Die zusätzliche Nutzung der Luftregel-/Abstellklappe 24 als Regelklappe bzw. Bypass-Ventil für den Booster 26 wird nachfolgend anhand der Fig. 3 bis 5 erläutert. In den Fig. 3 bis 5 sind funktionsgleiche Teile mit gleichen Bezugszeichen bezeichnet, wie in Fig. 1, so dass für deren Erläuterung auf die obige Beschreibung der Fig. 1 verwiesen wird. Die Fig. 3 bis 5 zeigen einen Ausschnitt der in Fig. 1 dargestellten Brennkraftmaschine mit der Ladeluftstrecke 22, Luftregel-/Abstellklappe 24 und Booster 26. Mit dem Bezugszeichen 28 ist ein von dem Verdichter 20 des Abgasturboladers kommender Abschnitt der Ladeluftstrecke 22 und mit dem Bezugszeichen 30 ist ein zu den Zylindern 12 der Brennkraftmaschine führender Abschnitt der Ladeluftstrecke 22 bezeichnet. Pfeile kennzeichnen die Strömungsrichtung eines Frischgasmassenstromes 38.

In Fig. 3 befindet sich die Luftregel-/Abstellklappe 24 in ihrer Funktion als Regelklappe für den Booster 26 in einer Stellung für einen zweistufigen Betrieb mit Abgasturbolader und Booster 26. Mit anderen Worten wird der Frischgasmassenstrom 38 über den Booster 26 geleitet, so dass das Frischgas sowohl vom Verdichter 20 des Abgasturboladers als auch vom Booster 26 verdichtet wird. Diese Stellung der Luftregel-/Abstellklappe 24 ist in solchen Betriebsphasen der Brennkraftmaschine vorteilhaft, in denen bei niedrigem Abgasmassenstrom bzw. niedrigem Frischgasmassenstrom 38 ein hoher Ladedruck in der Ladeluftstrecke 22 gewünscht ist. Der an dem Booster 26 vorbei führende Abschnitt der Ladeluftstrecke 22 wird möglichst fluiddicht von der Luftregel-/Abstellklappe 24 verschlossen.

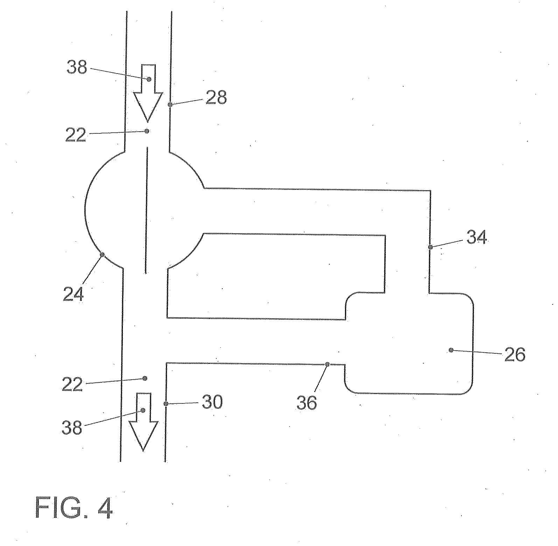

In Fig. 4 befindet sich die Luftregel-/Abstellklappe 24 in ihrer Funktion als Regelklappe für den Booster 26 in einer Stellung für einen ausschließlichen Betrieb mit Abgasturbolader. Hier wird der Frischgas-Massenstrom 38 vollständig an dem Booster 26 vorbei geleitet und der Booster 26 ist abgeschaltet. Diese Stellung der Luftregel-/Abstellklappe 24 ist in solchen Betriebsphasen der Brennkraftmaschine vorteilhaft, in denen ein hoher Abgasmassenstrom bzw. ein hoher Frischgasmassenstrom vorhanden ist. Hier hat der Abgasturbolader ausreichend Leistung, um mit dem Verdichter 20 einen gewünschten Ladedruck in der Ladeluftstrecke 22 zu erzeugen. Andererseits wäre wegen des hohen Frischgasmassenstromes 38 der Booster 26 ein großes Hindernis und würde einen unerwünschten Strömungswiderstand mit entsprechendem Verlust an Ladedruck darstellen.

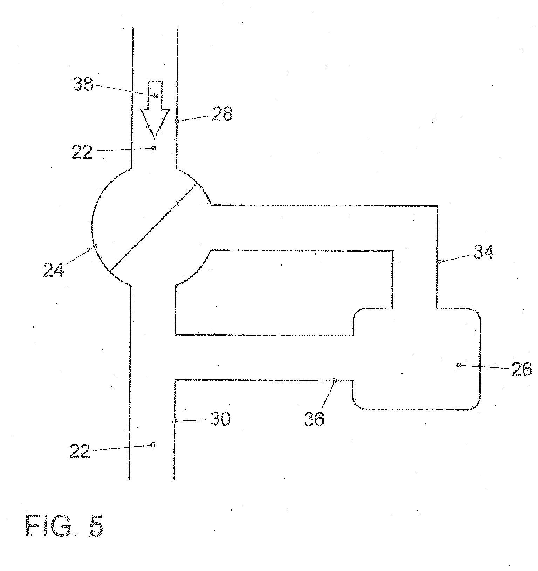

In Fig. 5 befindet sich die Luftregel-/Abstellklappe 24 in ihrer eigentlichen Funktion in einer Stellung für das Drosseln bzw. vollständige Abschalten der Brennkraftmaschine. Der fluidleitende Pfad sowohl über die Ladeluftstrecke 22 an dem Booster 26 vorbei als auch über den Booster 26 selbst ist durch die Luftregel-/Abstellklappe 24 im Wesentlichen vollständig blockiert.

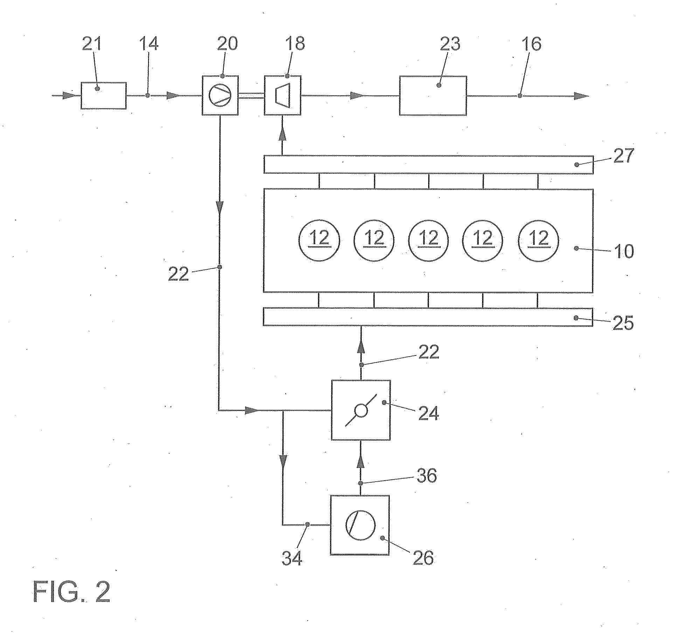

Bei der in Fig. 2 dargestellten, zweiten bevorzugten Ausführungsform einer erfindungsgemäßen Brennkraftmaschine sind funktionsgleiche Teile mit gleichen Bezugszeichen wie in Fig. 1 und 3 bis 5 bezeichnet, so dass zu deren Erläuterung auf die obige Beschreibung der Fig. 1 und 3 bis 5 verwiesen wird. Bei der zweiten bevorzugten Ausführungsform gemäß Fig. 2 ist der Booster 26 derart parallel zur Luftregel-/Abstellklappe 24 angeordnet, dass der Einlass 34 des Boosters 26 mit der Ladeluftstrecke 22 stromauf der Luftregel-/Abstellklappe 24 und der Auslass 36 des Boosters 26 mit der Ladeluftstrecke 22 stromab der Luftregel-/Abstellklappe 24 bzw. mit der Luftregel-/Abstellklappe 24 fluidleitend verbunden ist.

Wie auch schon bei der oben beschriebenen ersten bevorzugten Ausführungsform gemäß der Fig.1 ist durch die erfindungsgemäße Anordnung des Boosters parallel zur Luftregel-/Abstellklappe 24 kein zusätzlicher Bypasskanal mit entsprechendem Bypassventil für den Booster 26 notwendig, sondern es kann statt dessen für die Bypass-Funktion, bei der der Massenstrom des Frischgases an dem Booster 26 vorbei geleitet wird und der Booster 26 abgeschaltet ist, die Luftregel-/Abstellklappe 24 verwendet werden.

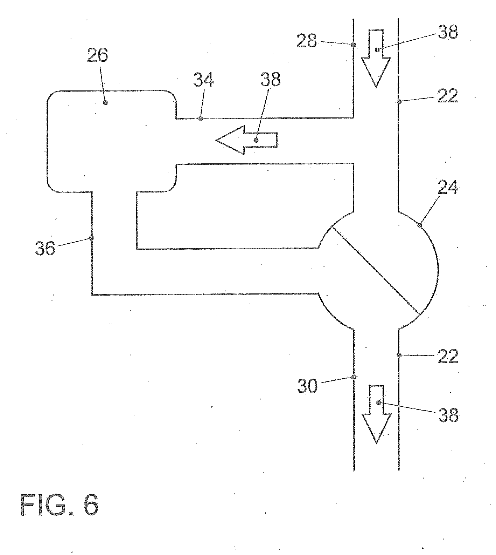

Die zusätzliche Nutzung der Luftregel-/Abstellklappe 24 als Regelklappe bzw. Bypassventil für den Booster 26 bei der zweiten bevorzugten Ausführungsform wird nachfolgend anhand der Fig. 6 bis 8 erläutert. In den Fig. 6 bis 8 sind funktionsgleiche Teile mit gleichen Bezugszeichen bezeichnet wie in den Fig. 1 bis 5, so dass für deren Erläuterung auf die obige Beschreibung der Fig. 1 bis 5 verwiesen wird. Die Fig. 6 bis 8 zeigen einen Ausschnitt der in Fig. 2 dargestellten Brennkraftmaschine mit Ladeluftstrecke 22, Luftregel-/Abstellklappe 24 und Booster 26. Mit dem Bezugszeichen 28 ist der von dem Verdichter 20 des Abgasturboladers kommende Abschnitt der Ladeluftstrecke 22 und mit dem Bezugszeichen 30 ist der zu den Zylindern 12 der Brennkraftmaschine führende Abschnitt der Ladeluftstrecke 22 bezeichnet. Pfeile kennzeichnen die Strömungsrichtung des Frischgasmassenstromes 38.

In Fig. 6 befindet sich die Luftregel-/Abstellklappe 24 in ihrer Funktion als Regelklappe für den Booster 26 in einer Stellung für einen zweistufigen Betrieb mit Abgasturbolader und Booster 26. Mit anderen Worten wird der Frischgasmassenstrom 38 über den Booster 26 geleitet, so dass das Frischgas sowohl vom Verdichter 20 des Abgasturboladers als auch vom Booster 26 verdichtet wird. Diese Stellung der Luftregel-/Abstellklappe 24 ist in solchen Betriebsphasen der Brennkraftmaschine vorteilhaft, in denen bei niedrigem Abgasmassenstrom bzw. niedrigem Frischgas-Massenstrom 38 ein hoher Ladedruck in der Ladeluftstrecke 22 gewünscht ist. Der an dem Booster 26 vorbei führende Abschnitt der Ladeluftstrecke 22 wird möglichst fluiddicht von der Luftregel-/Abstellklappe 24 verschlossen.

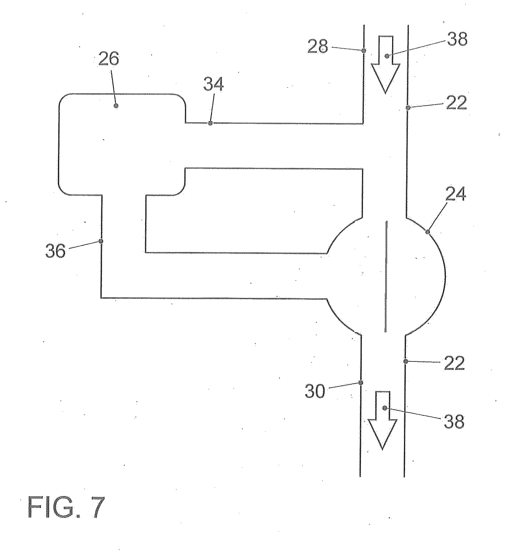

In Fig. 7 befindet sich die Luftregel-/Abstellklappe 24 in ihrer Funktion als Regelklappe für den Booster 26 in einer Stellung für einen ausschließlichen Betrieb mit Abgasturbolader. Hier wird der Frischgas-Massenstrom 38 vollständig an dem Booster 26 vorbei geleitet und der Booster 26 ist abgeschaltet. Diese Stellung der Luftregel-/Abstellklappe 24 ist in solchen Betriebsphasen der Brennkraftmaschine vorteilhaft, in denen ein hoher Abgasmassenstrom bzw. ein hoher Frischgasmassenstrom vorhanden ist. Hier hat der Abgasturbolader ausreichend Leistung, um mit dem Verdichter 20 einen gewünschten Ladedruck in der Ladeluftstrecke 22 zu erzeugen. Andererseits wäre wegen des hohen Frischgasmassenstromes 38 der Booster 26 ein großes Hindernis und würde einen unerwünschten Strömungswiderstand mit entsprechendem Verlust an Ladedruck darstellen. Der Auslass 36 des Boosters 26 wird von der Luftregel-/Abstellklappe 24 möglichst fluiddicht verschlossen.

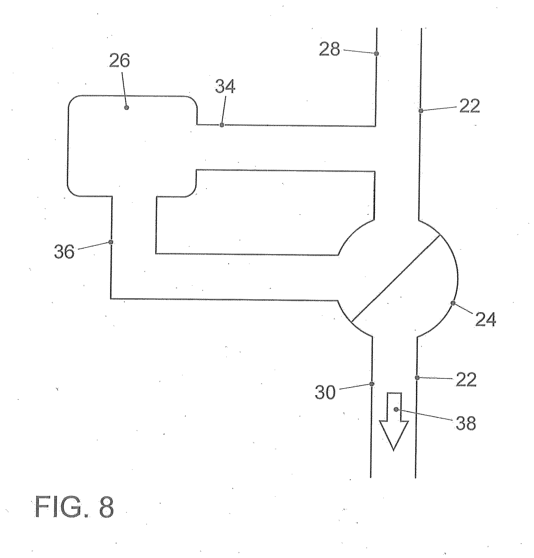

In Fig. 8 befindet sich die Luftregel-/Abstellklappe 24 in ihrer eigentlichen Funktion in einer Stellung für das Drosseln bzw. vollständige Abschalten der Brennkraftmaschine. Der fluidleitende Pfad über die Ladeluftstrecke 22 ist stromab des Booster 26 durch die Luftregel-/Abstellklappe 24 teilweise oder im Wesentlichen vollständig blockiert bzw. möglichst fluiddicht verschlossen.

Optional ist zusätzlich ein Schließmechanismus vorhanden, welcher im Falle eines abgeschalteten Boosters 26 gemäß Fig. 4 bzw. Fig. 7 den Auslass 36 des Boosters 26 (bei der ersten Ausführungsform gemäß Fig. 1 und Fig. 3 bis 5) oder den Einlass 34 des Boosters 26 (bei der zweiten Ausführungsform gemäß Fig. 2 und Fig. 6 bis 8) verschließt.

Bei einer Luftregel-/Abstellklappe 24 welche als um eine Achse schwenkbare Klappe ausgebildet ist, sind für die Zustände gemäß der Fig. 3 bzw. gemäß der Fig. 6, 7 und 8 Anschläge vorgesehen, um eine möglichst hohe Fluiddichtigkeit herzustellen.

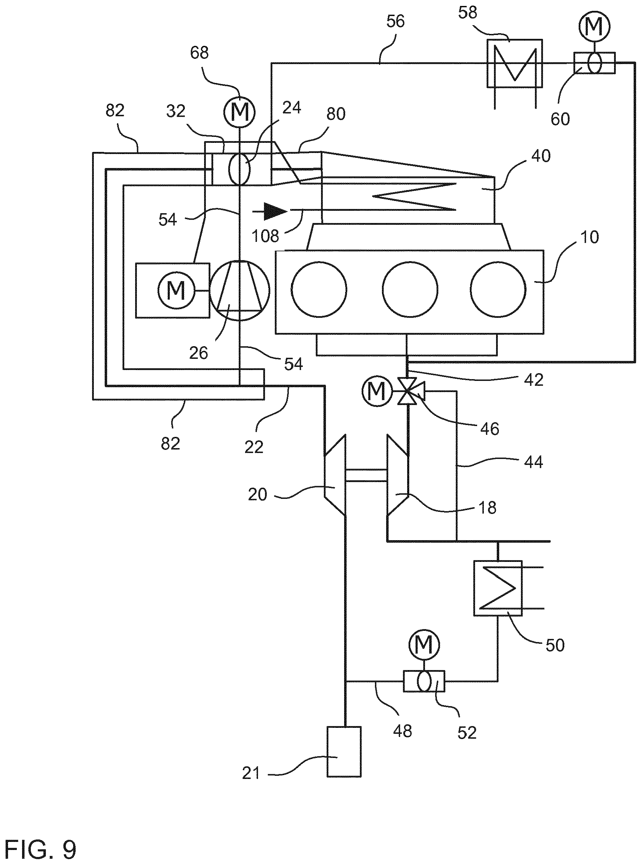

Die in der Fig. 9 dargestellte Ausführungsform einer erfindungsgemäßen Brennkraftmaschine wird über ein Frischgasversorgungssystem mit einer regulierten Menge eines Gemisches aus Abgas und Luft versorgt. Über einen Luftfilter 21 wird hierzu Umgebungsluft angesaugt, die mit einem vom Motorblock 10 zurückgeführten Abgasstrom aus einem Niederdruckabgasrückführkanal 48 gemischt wird. Dieses Frischgas gelangt über den Verdichter 20 eines Abgasturboladers in eine Ladeluftstrecke 22, in die n einem Ladeluftstreckenabschnitt 32 eine Luftregel-/Abstellklappe 24 angeordnet ist, über die das Frischgas geregelt über einen Ladeluftkühler 40 dem Motorblock 10 zugeführt wird. Das Abgas aus dem Motorblock 10 gelangt anschließend über eine Abgasleitung 42 zu einer Turbine 18 des Abgasturboladers, die über eine Umgehungsleitung 44, in der ein Wastegate-Ventil 46 angeordnet ist, umgangen werden kann. Hinter der Turbine 18 strömt das Abgas entweder über eine nicht dargestellte Abgasnachbehandlungseinrichtung in die Umgebung oder in den Niederdruckabgasrückführkanal 48, in dem ein Abgaskühler 50 und ein Abgasrückführventil 52 angeordnet sind.

Von der Ladeluftstrecke 22 zweigt am Anfang des Ladeluftstreckenabschnitts 32 ein Bypasskanal 54 ab, in den ein elektrisch angetriebener Verdichter ("Booster") 26 integriert ist. Der Bypasskanal 54 mündet im Bereich der Luftregel-/Abstellklappe 24 in den Ladeluftstreckenabschnitt 32. Entsprechend strömt das Frischgas bei geöffneter Luftregel-/Abstellklappe 24 und abgeschaltetem Booster 26 durch den von dem Bypasskanal 54 umgangenen Abschnitt des Ladeluftstreckenabschnitts 32, da dann der Strömungswiderstand des Boosters 26 höher ist als der dieses Abschnitts des Ladeluftstreckenabschnitts 32. Eine Regelung des dem Motorblock 10 zugeführten Frischgasmassenstroms kann dabei durch unterschiedliche "geöffnet"-Stellungen der Luftregel-/Abstellklappe 24 erfolgen.

Bei einer kurzfristig stark erhöhten Lastanforderung an die Brennkraftmaschine tritt das Problem auf, dass der Abgasturbolader erst verzögert einen entsprechenden Ladedruck zur Verfügung stellen kann, da dafür zunächst ein entsprechend erhöhter Abgasmassenstrom die Turbine 18 durchströmen muss. In solchen Betriebszuständen der Brennkraftmaschine ist vorgesehen, den Booster 26 in Betrieb zu nehmen und gleichzeitig die Luftregel-/Abstellklappe 24 in eine (erste) Stellung zu bewegen, in der diese den Ladeluftstreckenabschnitt 32 stromaufwärts des Auslasses des Bypasskanals 54 verschließt, so dass im Wesentlichen das gesamte Frischgas auch über den Booster 26 geführt und dabei zusätzlich verdichtet wird. Dadurch wird dem Motorblock 10 kurzfristig der benötigte Ladedruck zur Verfügung gestellt.

Weiterhin zweigt stromaufwärts der Turbine 18 aus dem Abgasstrang ein Hochdruckabgasrückführkanal 56 ab, in dem ein Abgaskühler 58 sowie ein Abgasrückführventil 60 zur Regelung der rückgeführten Abgasmenge angeordnet sind. Der Hochdruckabgasrückführkanal 56 mündet in kurzem Abstand stromabwärts des Ladeluftstreckenabschnitts 32 in die Ladeluftstrecke 22. Insbesondere bei einem Betrieb der Brennkraftmaschine mit niedrigen oder mittleren Lasten kann durch Anstellen der Luftregel-/Abstellklappe 24 der Druckabfall über der Luftregel-/Abstellklappe24 erhöht werden, so dass infolge eines dann weiter verringerten (Unter-)Drucks im Bereich der Mündung des Hochdruckabgasrückführkanals 56 ein erhöhter Abgasstrom zum Motorblock 10 zurückgeführt werden kann.

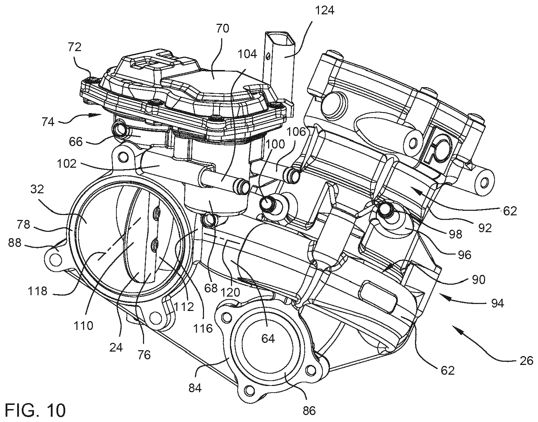

In der Fig. 10 ist eine Baugruppe dargestellt, die den Ladeluftstreckenabschnitt 32, den Booster 26 und die Ladeluft/Abstellklappe 24 integriert. Ein Strömungsgehäuse 62 des Boosters 26, in dem ein nicht sichtbares Verdichterrad angeordnet ist, ist einstückig mit einem den Ladeluftstreckenabschnitt 32 ausbildenden Gehäuse 78 ausgebildet.. Im dargestellten Ausführungsbeispiel verbindet ein Bypasskanalabschnitt 64 einen das Verdichterrad aufnehmenden Verdichterraum des Strömungsgehäuse 62 mit dem Ladeluftstreckenabschnitt 32. Der Bypasskanalabschnitt stellt dabei einen tangential zum Verdichterraum angeordneten Auslass des Bypasskanals 54 dar, der im Bereich der Luftregel-/Abstellklappe in den Ladeluftstreckenabschnitt 32 mündet.

Zusätzlich ist ein Aktorgehäuse 66, in den ein Elektromotor 68 integriert ist und das durch einen Deckel 70 mittels Schrauben 72 verschlossen ist, einstückig mit dem Gehäuse 78 des Ladeluftstreckenanalabschnitts 32 und damit auch mit dem Strömungsgehäuse 62 ausgebildet. Über einen Steckverbinder 124 kann der Elektromotor 68 mit Strom versorgt werden. Das Aktorgehäuse 66 bildet mit dem Elektromotor 68, einem nicht sichtbaren Getriebe zwischen dem Elektromotor 68 und der Luftregel-/Abstellklappe 24 und dem Deckel 70 einen elektrischen Aktor 74 für einen Drehantrieb für eine Klappenwelle 76 aus, die das Gehäuse 78 des Ladeluftstreckenabschnitts 32 zentral beziehungsweise radial durchdringt und an der die Luftregel-/Abstellklappe 24 drehfest befestigt ist. Die Luftregel-/Abstellklappe 24 teilt so den Ladeluftstreckenabschnitt 32 in eine stromabwärts gelegene Seite 80 und eine stromaufwärts gelegene Seite 82. Über den Elektromotor 68 kann die Luftregel-/Abstellklappe 24 in unterschiedliche Stellungen im Ladeluftstreckenabschnitt 32 gedreht werden. Die Luftregel-/Abstellklappe 24 wird durch die Klappenwelle 76 in zwei Hälften 110, 112 geteilt.

Ein Flansch 84 eines Einlassstutzens 86 des Boosters 26 befindet sich in einer Ebene, welche lediglich geringfügig zu der Ebene eines Flansches 88 des Gehäuses 78 des Ladeluftstreckenabschnitts 32 geneigt ist, so dass eine Zugänglichkeit von einer Seite gegeben ist, was eine Montage der Baugruppe vereinfachen kann. Ausgehend von dem Flansch 84 erfolgt eine leichte Krümmung des Einlassstutzens 86, so dass das Frischgas in etwa axial in den Verdichterraum des Booster 26 einströmt.

Ebenfalls lediglich geringfügig zu einer Befestigungsfläche des Deckels 70 des Aktors 74 geneigt ist am Strömungsgehäuse 62 an der zum Einlassstutzen 86 gegenüberliegenden Seite ein Flansch 90 ausgebildet, an dem ein Gehäuseteil 92 des Strömungsgehäuses 62 befestigt ist, in dem ein nicht sichtbarer, das Verdichterrad antreibender Elektromotor angeordnet ist, der eine nicht sichtbare Welle antreibt, an der das Verdichterrad drehfest befestigt ist. So kann auch die Montage des Elektromotor 68 des Aktors 74, des Elektromotors des Boosters 26 sowie der dazugehörigen Gehäuseteile 66, 92 von derselben Richtung aus erfolgen.

Das Strömungsgehäuse 62 bildet gemeinsam mit dem Gehäuseteil 92 zur Aufnahme des Elektromotors des Boosters 26 ein Verdichtergehäuse 94, in dem zum Schutz des Elektromotors 78 vor Überhitzung zudem ein Kühlmittelkanal 96 ausgebildet ist, der über einen Kühlmitteleinlassstutzen 98 mit Kühlmittel versorgt wird, welches über einen Kühlmittelauslassstutzen 100 wieder austritt.

Eine derartige Kühlung ist auch für das Aktorgehäuse 66 vorgesehen, wozu dieses einen Kühlmittelkanal 102 ausgebildet, der den elektrischen Aktor 74 vor Überhitzung schützt. Auch hier sind am Aktorgehäuse 66 ein Kühlmitteleinlassstutzen 104 und ein Kühlmittelauslassstutzen 106 ausgebildet. Die Kühlmittelkanäle 96, 102 können in einen Kühlkreislauf integriert und dazu insbesondere mit einer Kühlmittelleitung 108 des Ladeluftkühlers 40 verbunden sein (vgl. Fig. 9).

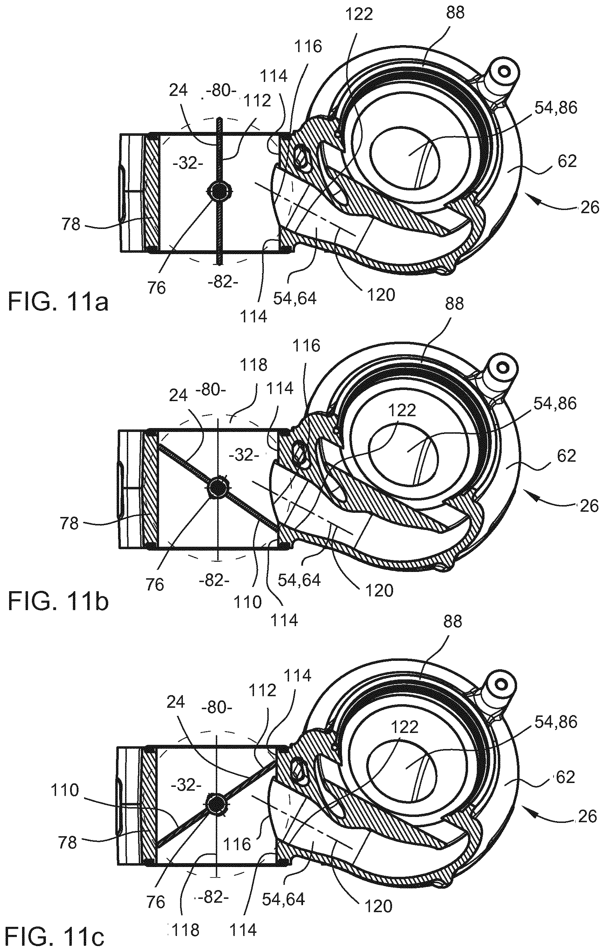

In den Fig. 11a bis 11c sind unterschiedliche Stellungen der Luftregel-/Abstellklappe 24 in dem Ladeluftstreckenabschnitt 32 dargestellt.

In der Fig. 11a befindet sich die Luftregel-/Abstellklappe 24 in einer weitestmöglich geöffneten Stellung, die eine dritte erfindungsgemäße Stellung darstellt. Es besteht dann eine fluidleitende Verbindung zwischen der stromabwärts gelegenen Seite 80 und der stromaufwärts gelegenen Seite 82 des Ladeluftstreckenabschnitts 32. Eine solche dritte Stellung der Luftregel-/Abstellklappe 24 wird mittels des Aktors 74 angesteuert, wenn der Booster nicht in Betrieb genommen ist. Durch das dann stillstehende Verdichterrad des Boosters 26 ist der Strömungswiderstand im Bypasskanal 54 deutlich höher als in dem von dem Bypasskanal 54 umgangenen Abschnitt des Ladeluftstreckenabschnitts 32, so dass das Frischgas im Wesentlichen über diesen Abschnitt des Ladeluftstreckenabschnitts 32 zum Motorblock 10 gelangt. Durch ein Verschwenken der Luftregel-/Abstellklappe 24, ohne diese jedoch in eine der in den Fig. 11b und 11c dargestellte Schließstellung zu bewegen, kann der zum Motorblock 10 gelangende Frischgasmassenstrom geregelt werden und gleichzeitig ein Druckgefälle im stromabwärts der Luftregel-/Abstellklappe 24 in die Ladeluftstrecke 22 mündenden Hochdruckabgasrückführkanal 56 vergrößert werden, so dass ein höherer Abgasanteil zum Motorblock 10 zurückgeführt werden kann.

In der Fig. 11b ist die Luftregel-/Abstellklappe 24 in einer ersten, den von dem Bypasskanal 54 umgangenen Abschnitt des Ladeluftstreckenabschnitts 32 verschließenden Stellung dargestellt.

In dieser ersten Stellung ist der von dem Bypasskanal 54 umgangene Abschnitt des Ladeluftstreckenabschnitts 32 im Wesentlichen vollständig verschlossen, so dass eine direkte fluidleitende Verbindung zwischen der stromabwärts gelegenen Seite 80 und der stromaufwärts gelegenen Seite 82 des Ladeluftstreckenabschnitts 32 unterbrochen, dabei jedoch über den Bypasskanal 54 gegeben ist. Die erste Hälfte 110 der Luftregel-/Abstellklappe 24 liegt in dieser ersten Stellung gegen eine Innenwand 114 des Ladeluftstreckenabschnitts 32 stromaufwärts eines Auslasses 116 des Bypasskanalabschnitts 64 an. Zudem liegt die erste Hälfte 110 der Luftregel-/Abstellklappe 24 stromaufwärts bezüglich der zweiten Hälfte 112 der Luftregel-/Abstellklappe 24. Der Winkel, den die von der Luftregel-/Abstellklappe 24 aufgespannte Klappenfläche in dieser ersten Stellung zu einer Mittellängsachse 118 des Ladeluftstreckenabschnitts 32 einschließt, ist etwa 5° kleiner als derjenige Winkel, den eine Mittellängsachse 120 des Bypasskanalabschnitts 64 mit der Mittellängsachse 118 des Ladeluftstreckenabschnitts 32 einschließt. Die Luftregel-/Abstellklappe 24 verläuft somit vom Bypasskanalabschnitt 64 in Richtung des Ladeluftstreckenabschnitts 32 geneigt und verlängert einen radial äußeren Wandabschnitt 122 des Bypasskanalabschnitts 64.

Die erste Stellung der Luftregel-/Abstellklappe 24 wird eingestellt, wenn der Booster 26 aufgrund einer kurzfristig stark gestiegenen Lastanforderung an die Brennkraftmaschine in Betrieb genommen wird und durch den Booster 26 ein verzögerter Ladedruckaufbau des Abgasturboladers kompensiert werden soll. In dieser Stellung der Luftregel-/Abstellklappe 24 kann eine Regelung des dem Motorblock 10 zugeführten Frischgasmassenstroms über die Drehzahl des Boosters 26 erfolgen.

Wird ein Betrieb des Verbrennungsmotors der Brennkraftmaschine eingestellt, wird die Luftregel-/Abstellklappe 24 in die in der Fig. 11c dargestellte, zweite, den Ladeluftstreckenabschnitt 32 verschließende Stellung bewegt. In dieser Stellung liegt die Luftregel-/Abstellklappe 24 mit der zweiten Hälfte 112 der Luftregel-/Abstellklappe 24 gegen die Innenwand 114 des Ladeluftstreckenabschnitts 32 an, jedoch diesmal stromabwärts des Bypasskanalabschnitts 64. Somit kann Frischgas weder direkt über den Ladeluftstreckenabschnitt 32 noch über den Bypasskanal 54 bis zum Motorblock 10 strömen. Dadurch kann ein Nachlaufen des Verbrennungsmotors durch ungewolltes Zünden nach dem Abstellen zuverlässig verhindert werden.

Durch die erfindungsgemäße Ausgestaltung einer Brennkraftmaschine werden somit verschiedene Funktionen mehrerer, in bekannten Verbrennungsmotoren vorgesehener Drosselklappen mittels einer einzigen Luftregel-/Abstellklappe 24 realisiert. Diese dient als Regelklappe zur Frischgasregelung und Druckgefälleregelung im Hochdruckabgasrückführkanal 56, als Umschaltung zur bedarfsweisen Integration eines den Booster 26 integrierenden Bypasskanals 54 in die Ladeluftstrecke 22 und verhindert als Abstellklappe einen Nachlauf eines Verbrennungsmotors der Brennkraftmaschine. Somit kann erfindungsgemäße eine Brennkraftmaschine realisiert werden, die eine verringerte Anzahl an Bauteilen aufweist, wodurch der Herstellungsaufwand und der Montageaufwand reduziert ist.

### Bezugszeichenliste

- 10: Motorblock
- 12: Arbeitszylinder
- 14: Frischgasstrang
- 16: Abgasstrang
- 18: Turbine
- 20: Verdichter
- 21: Luftfilter
- 22: Ladeluftstrecke
- 23: Abgasnachbehandlungseinrichtung
- 24: Luftregel-/Abstellklappe
- 25: Sammelrohr des Frischluftstranges 14
- 26: mechanisch angetriebener Verdichter / Booster
- 27: Abgaskrümmer des Abgasstranges 16
- 28: vom dem Verdichter 20 des Abgasturboladers kommender Abschnitt der Ladeluftstrecke 22
- 30: ein zu den Zylindern 12 der Brennkraftmaschine führender Abschnitt der Ladeluftstrecke 22
- 32: Ladeluftstreckenabschnitt
- 34: Einlass des Boosters 26
- 36: Auslass des Boosters 26
- 38: Frischgas-Massenstrom
- 40: Ladeluftkühler
- 42: Abgasleitung
- 44: Umgehungsleitung
- 46: Wastegate-Ventil
- 48: Niederdruckabgasrückführkanal
- 50: Abgaskühler
- 52: Abgasrückführventil
- 54: Bypasskanal
- 56: Hochdruckabgasrückführkanal
- 58: Abgaskühler
- 60: Abgasrückführventil
- 62: Strömungsgehäuse des Boosters
- 64: Bypasskanalabschnitt
- 66: Aktorgehäuse
- 68: Elektromotor
- 70: Deckel
- 72: Schrauben
- 74: Aktor
- 76: Klappenwelle
- 78: Gehäuse des Ladeluftstreckenabschnitts
- 80: stromabwärts gelegene Seite des Ladeluftstreckenabschnitts
- 82: stromaufwärts gelegene Seite des Ladeluftstreckenabschnitts
- 84: Flansch
- 86: Einlassstutzen
- 88: Flansch
- 90: Flansch
- 92: Gehäuseteil des Strömungsgehäuses
- 94: Verdichtergehäuse
- 96: Kühlmittelkanal
- 98: Kühlmitteleinlassstutzen
- 100: Kühlmittelauslassstutzen
- 102: Kühlmittelkanal
- 104: Kühlmitteleinlassstutzen
- 106: Kühlmittelauslassstutzen
- 108: Kühlmittelleitung
- 110: erste Hälfte der Luftregel-/Abstellklappe
- 112: zweite Hälfte der Luftregel-/Abstellklappe
- 114: Innenwand des Ladeluftstreckenabschnitts
- 116: Auslass des Bypasskanalabschnitts
- 118: Mittellängsachse des Ladeluftstreckenabschnitts
- 120: Mittellängsachse des Bypasskanalabschnitts
- 122: Wandabschnitt
- 124: Steckverbinder

## Patentansprüche

1. Brennkraftmaschine mit einem Frischgasstrang (14) zum Zuführen von Frischgas (38) an Arbeitszylinder (12) der Brennkraftmaschine, wobei in einer Ladeluftstrecke (22) des Frischgasstrangs (14) ein mechanisch angetriebener Verdichter (26) angeordnet ist und in der Ladeluftstrecke (22) eine Luftregel-/Abstellklappe (24) derart angeordnet ist, dass in Abhängigkeit von einer Stellung der Luftregel-/Abstellklappe (24) ein Gasmassenstrom in der Ladeluftstrecke (22) vollständig oder teilweise über den mechanisch angetriebenen Verdichter (26) oder an dem mechanisch angetriebenen Verdichter (26) vorbei strömen kann, **dadurch gekennzeichnet, dass** der mechanisch angetriebene Verdichter (26) in einen einen Ladeluftstreckenabschnitt (32) teilweise umgehenden Bypasskanal (54) integriert ist und die Luftregel-/Abstellklappe (24)
- in eine erste, den Ladeluftstreckenabschnitt (32) stromauf eines Auslasses (36) des Bypasskanals (54) und stromab eines Einlasses (34) des Bypasskanals (54) verschließende Stellung bewegbar ist, und
- in eine zweite, den Ladeluftstreckenabschnitt (32) stromab des Auslasses (36) des Bypasskanals (54) oder stromauf des Einlasses (34) des Bypasskanals (54) verschließende Stellung bewegbar ist.

2. Brennkraftmaschine nach Anspruch 1, **dadurch gekennzeichnet, dass** in dem Frischgasstrang (14) stromauf des mechanisch angetriebenen Verdichters (26) ein Verdichter (20) einer Ladeeinrichtung, insbesondere eines Abgasturboladers, angeordnet ist.

3. Brennkraftmaschine nach Anspruch 1 oder 2, **dadurch gekennzeichnet, dass** die Luftregel-/Abstellklappe (24) derart angeordnet und ausgebildet ist, dass diese den Ladeluftstreckenabschnitt (32) parallel zum mechanisch angetriebenen Verdichter (26) zwischen dem Einlass (34) und dem Auslass (36) des den mechanisch angetriebenen Verdichter (26) integrierenden Bypasskanals (54) wahlweise öffnet oder verschließt.

4. Brennkraftmaschine nach mindestens einem der vorhergehenden Ansprüche, **dadurch gekennzeichnet, dass** die Luftregel-/Abstellklappe (24) derart angeordnet und ausgebildet ist, dass diese den Auslass (36) des den mechanisch angetriebenen Verdichter (26) integrierenden Bypasskanals (54) wahlweise öffnet oder verschließt.

5. Brennkraftmaschine nach mindestens einem der Ansprüche 1 bis 4, **dadurch gekennzeichnet, dass** die Luftregel-/Abstellklappe (24) derart angeordnet und ausgebildet ist, dass diese den Einlass (34) des den mechanisch angetriebenen Verdichter (26) integrierenden Bypasskanals (54) wahlweise öffnet oder verschließt.

6. Brennkraftmaschine nach einem der vorhergehenden Ansprüche, **dadurch gekennzeichnet, dass** die Luftregel-/Abstellklappe (24) in eine dritte, den Ladeluftstreckenabschnitt (32) zumindest teilweise freigebende Stellung bewegbar ist.

7. Brennkraftmaschine nach einem der vorhergehenden Ansprüche, **dadurch gekennzeichnet, dass** stromabwärts der Luftregel-/Abstellklappe (24) ein Hochdruckabgasrückführkanal (56) in die Ladeluftstrecke (22) mündet.

8. Brennkraftmaschine nach einem der vorhergehenden Ansprüche, **dadurch gekennzeichnet, dass** die Luftregel-/Abstellklappe (24) in ihrer ersten Stellung in Verlängerung eines radial äußeren, die Strömung im Bypasskanal (54) begrenzenden Wandabschnitts (122) eines einen Auslass eines Strömungsgehäuses (62) bildenden, gekrümmt verlaufenden Bypasskanalabschnitts (64) angeordnet ist.

9. Brennkraftmaschine nach Anspruch 8, **dadurch gekennzeichnet, dass** der Bypasskanalabschnitt (64) schräg zu einer Mittellängsachse (118) des Ladeluftstreckenabschnitts (32) in diesen mündet.

10. Brennkraftmaschine nach einem der vorhergehenden Ansprüche, **dadurch gekennzeichnet, dass** die Luftregel-/Abstellklappe (24) in der ersten Stellung und der zweiten Stellung schräg bezüglich einer Mittellängsachse (118) des Ladeluftstreckenabschnitts (32) angeordnet ist.

11. Brennkraftmaschine nach einem der vorhergehenden Ansprüche, **dadurch gekennzeichnet, dass** ein Winkel zwischen der Luftregel-/Abstellklappe (24) in der ersten Stellung und einer Mittellängsachse (118) des Ladeluftstreckenabschnitts (32) bis zu 10° kleiner ist als ein Winkel zwischen der Mittellängsachse (118) des Ladeluftstreckenabschnitts (32) und einer Mittellängsachse (120) des Bypasskanalabschnitts (64).

12. Brennkraftmaschine nach einem der vorhergehenden Ansprüche, **dadurch gekennzeichnet, dass** ein Gehäuse des in den Ladeluftstreckenabschnitt (32) mündenden Bypasskanalabschnitts (64) einstückig mit einem Gehäuse (78) des Ladeluftstreckenabschnitts (32) und dem Strömungsgehäuse (62) des mechanisch angetriebenen Verdichters (26) ausgebildet ist.

13. Brennkraftmaschine nach einem der vorhergehenden Ansprüche, **dadurch gekennzeichnet, dass** die Luftregel-/Abstellklappe (24) über einen elektromotorischen Aktor (74) betätigbar ist.

14. Verfahren zum Betreiben einer Brennkraftmaschine nach einem der vorhergehenden Ansprüche, wobei bei eingeschaltetem mechanisch angetriebenem Verdichter (26) zur zusätzlichen Verdichtung des Gasmassenstroms die Luftregel-/Abstellklappe (24) in die erste Stellung bewegt wird und beim Abschalten eines Verbrennungsmotors der Brennkraftmaschine die Luftregel-/Abstellklappe (24) in die zweite Stellung bewegt.

## Claims

1. Internal combustion engine having a fresh-gas tract (14) for the feed of fresh gas (38) to working cylinders (12) of the internal combustion engine, wherein a mechanically driven compressor (26) is arranged in a charge-air path (22) of the fresh-gas tract (14), and an air regulating/shut-off flap (24) is arranged in the charge-air path (22) such that, in a manner dependent on a position of the air regulating/shut-off flap (24), a gas mass flow in the charge-air path (22) can flow entirely or partially via the mechanically driven compressor (26) or past the mechanically driven compressor (26), **characterized in that** the mechanically driven compressor (26) is integrated into a bypass channel (54) which partially bypasses a charge-air path section (32), and the air regulating/shut-off flap (24)
- is movable into a first position, which closes the charge-air path section (32) upstream of an outlet (36) of the bypass channel (54) and downstream of an inlet (34) of the bypass channel (54), and
- is movable into a second position, which closes the charge-air path section (32) downstream of the outlet (36) of the bypass channel (54) or upstream of the inlet (34) of the bypass channel (54) .

2. Internal combustion engine according to Claim 1, **characterized in that** a compressor (20) of a supercharging device, in particular of an exhaust-gas turbocharger, is arranged in the fresh-gas tract (14) upstream of the mechanically driven compressor (26) .

3. Internal combustion engine according to Claim 1 or 2, **characterized in that** the air regulating/shutoff flap (24) is arranged and designed so as to selectively open or close the charge-air path section (32) in parallel with respect to the mechanically driven compressor (26) between the inlet (34) and the outlet (36) of the bypass channel (54) which integrates the mechanically driven compressor (26) .

4. Internal combustion engine according to any of the preceding claims, **characterized in that** the air regulating/shut-off flap (24) is arranged and designed so as to selectively open or close the outlet (36) of the bypass channel (54) which integrates the mechanically driven compressor (26).

5. Internal combustion engine according to at least one of Claims 1 to 4, **characterized in that** the air regulating/shut-off flap (24) is arranged and designed so as to selectively open or close the inlet (34) of the bypass channel (54) which integrates the mechanically driven compressor (26).

6. Internal combustion engine according to any of the preceding claims, **characterized in that** the air regulating/shut-off flap (24) is movable into a third position which at least partially opens up the charge-air path section (32).

7. Internal combustion engine according to any of the preceding claims, **characterized in that** a highpressure exhaust-gas recirculation channel (56) opens into the charge-air path (22) downstream of the air regulating/shut-off flap (24).

8. Internal combustion engine according to any of the preceding claims, **characterized in that** the air regulating/shut-off flap (24), in its first position, is arranged as an elongation of a radially outer wall section (122), which delimits the flow in the bypass channel (54), of a bypass channel section (64) which forms an outlet of a flow housing (62) and which runs in a curved manner.

9. Internal combustion engine according to Claim 8, **characterized in that** the bypass channel section (64) opens into the charge-air path section (32) obliquely with respect to a central longitudinal axis (118) of said charge-air path section.

10. Internal combustion engine according to any of the preceding claims, **characterized in that** the air regulating/shut-off flap (24), in the first position and in the second position, is arranged obliquely with respect to a central longitudinal axis (118) of the charge-air path section (32).

11. Internal combustion engine according to any of the preceding claims, **characterized in that** an angle between the air regulating/shut-off flap (24) in the first position and a central longitudinal axis (118) of the charge-air path section (32) is up to 10° smaller than an angle between the central longitudinal axis (118) of the charge-air path section (32) and a central longitudinal axis (120) of the bypass channel section (64).

12. Internal combustion engine according to any of the preceding claims, **characterized in that** a housing of the bypass channel section (64) which opens into the charge-air path section (32) is formed as a single piece with a housing (78) of the charge-air path section (32) and the flow housing (62) of the mechanically driven compressor (26).

13. Internal combustion engine according to any of the preceding claims, **characterized in that** the air regulating/shut-off flap (24) is actuatable by means of an electromotive actuator (74).

14. Method for operating an internal combustion engine according to any of the preceding claims, wherein, when the mechanically driven compressor (26) is active, for additional compression of the gas mass flow, the air regulating/shut-off flap (24) is moved into the first position and, when a combustion motor of the internal combustion engine is shut down, the air regulating/shut-off flap (24) is moved into the second position.

## Revendications

1. Moteur à combustion interne comprenant une ligne de gaz frais (14) pour amener du gaz frais (38) à des cylindres de travail (12) du moteur à combustion interne, un compresseur (26) entraîné de façon mécanique étant disposé dans un tronçon d'air de suralimentation (22) de la ligne de gaz frais (14), et un clapet de réglage/régulation d'air (24) étant disposé dans le tronçon d'air de suralimentation (22) de telle sorte que suivant une position du clapet de réglage/régulation d'air (24), un débit massique de gaz peut circuler dans le tronçon d'air de suralimentation (22) en passant complètement ou partiellement par le compresseur (26) entraîné de façon mécanique ou en contournant le compresseur (26) entraîné de façon mécanique, **caractérisé en ce que** le compresseur (26) entraîné de façon mécanique est intégré dans un canal de dérivation (54) entourant partiellement une section de tronçon d'air de suralimentation (32), et le clapet de réglage/régulation d'air (24) :
- peut être déplacé dans une première position fermant la section de tronçon d'air de suralimentation (32) en amont d'un échappement (36) du canal de dérivation (54) et en aval d'une admission (34) du canal de dérivation (54) ; et
- peut être déplacé dans une deuxième position fermant la section de tronçon d'air de suralimentation (32) en aval de l'échappement (36) du canal de dérivation (54) ou en amont de l'admission (34) du canal de dérivation (54) .

2. Moteur à combustion interne selon la revendication 1, **caractérisé en ce qu'**un compresseur (20) d'un dispositif de suralimentation, notamment d'un turbocompresseur à gaz d'échappement, est disposé dans la ligne de gaz frais (14) en amont du compresseur (26) entraîné de façon mécanique.

3. Moteur à combustion interne selon la revendication 1 ou 2, **caractérisé en ce que** le clapet de réglage/régulation d'air (24) est disposé et réalisé de telle sorte que celui-ci ouvre ou ferme sélectivement la section de tronçon d'air de suralimentation (32) parallèlement au compresseur (26) entraîné de façon mécanique entre l'admission (34) et l'échappement (36) du canal de dérivation (54) intégrant le compresseur (26) entraîné de façon mécanique.

4. Moteur à combustion interne selon au moins l'une des revendications précédentes, **caractérisé en ce que** le clapet de réglage/régulation d'air (24) est disposé et réalisé de telle sorte que celui-ci ouvre ou ferme sélectivement l'échappement (36) du canal de dérivation (54) intégrant le compresseur (26) entraîné de façon mécanique.

5. Moteur à combustion interne selon au moins l'une des revendications 1 à 4, **caractérisé en ce que** le clapet de réglage/régulation d'air (24) est disposé et réalisé de telle sorte que celui-ci ouvre ou ferme sélectivement l'admission (34) du canal de dérivation (54) intégrant le compresseur (26) entraîné de façon mécanique.

6. Moteur à combustion interne selon l'une des revendications précédentes, **caractérisé en ce que** le clapet de réglage/régulation d'air (24) peut être déplacé dans une troisième position libérant au moins partiellement la section de tronçon d'air de suralimentation (32).

7. Moteur à combustion interne selon l'une des revendications précédentes, **caractérisé en ce qu'**un canal de retour de gaz d'échappement sous haute pression (56) débouche dans le tronçon d'air de suralimentation (22) en aval du clapet de réglage/régulation d'air (24).

8. Moteur à combustion interne selon l'une des revendications précédentes, **caractérisé en ce que** le clapet de réglage/régulation d'air (24) est disposé dans sa première position dans le prolongement d'une section de paroi (122), extérieure radialement, délimitant l'écoulement dans le canal de dérivation (54), d'une section de canal de dérivation (64) s'étendant de façon coudée et formant un échappement d'un carter d'écoulement (62) .

9. Moteur à combustion interne selon la revendication 8, **caractérisé en ce que** la section de canal de dérivation (64) débouche dans la section de tronçon d'air de suralimentation (32) de façon oblique par rapport à un axe longitudinal central (118) de ladite section.

10. Moteur à combustion interne selon l'une des revendications précédentes, **caractérisé en ce que** le clapet de réglage/régulation d'air (24) est disposé dans la première position et la deuxième position de façon oblique par rapport à un axe longitudinal central (118) de la section de tronçon d'air de suralimentation (32).

11. Moteur à combustion interne selon l'une des revendications précédentes, **caractérisé en ce qu'**un angle entre le clapet de réglage/régulation d'air (24) dans la première position et un axe longitudinal central (118) de la section de tronçon d'air de suralimentation (32) peut être inférieur de jusqu'à 10° à un angle entre l'axe longitudinal central (118) de la section de tronçon d'air de suralimentation (32) et un axe longitudinal central (120) de la section de canal de dérivation (64).

12. Moteur à combustion interne selon l'une des revendications précédentes, **caractérisé en ce qu'**un carter de la section de canal de dérivation (64) débouchant dans la section de tronçon d'air de suralimentation (32) est réalisé d'un seul tenant avec un carter (78) de la section de tronçon d'air de suralimentation (32) et avec le carter d'écoulement (62) du compresseur (26) entraîné de façon mécanique.

13. Moteur à combustion interne selon l'une des revendications précédentes, **caractérisé en ce que** le clapet de réglage/régulation d'air (24) peut être actionné par le biais d'un actionneur (74) électromotorisé.

14. Procédé de fonctionnement d'un moteur à combustion interne selon l'une des revendications précédentes, dans lequel lorsque le compresseur (26) entraîné de façon mécanique est connecté, le clapet de réglage/régulation d'air (24) est déplacé dans la première position pour effectuer une compression supplémentaire du flux massique de gaz et lorsqu'un moteur thermique du moteur à combustion interne est déconnecté, le clapet de réglage/régulation d'air (24) est déplacé dans la deuxième position.
